# EUROPÄISCHE PATENTSCHRIFT

(11) **EP 2 232 087 B1**
(45) Veröffentlichungstag und Bekanntmachung des Hinweises auf die Patenterteilung: **13.04.2016**
(21) Anmeldenummer: 09701677.8
(22) Anmeldetag: 15.01.2009
(51) Int. Cl.: F16B 25/10

(54) **VERBINDUNGSEINRICHTUNG UND VERFAHREN ZUM ERSTELLEN EINER SCHRAUBVERBINDUNG**
CONNECTING DEVICE AND METHOD FOR CREATING A SCREW CONNECTION
DISPOSITIF DE CONNEXION ET PROCÉDÉ DE CRÉATION D'UNE CONNEXION VISSÉE

(30) Priorität: 15.01.2008 DE 202008000574 U
(43) Veröffentlichungstag der Anmeldung: 29.09.2010
(73) Patentinhaber: Hilleke, Stefan, 58809 Neuenrade (DE)
(72) Erfinder: Hilleke, Stefan, 58809 Neuenrade (DE)
(74) Vertreter: Müller, Bernhard
(86) Internationale Anmeldenummer: PCT/EP2009/000223
(87) Internationale Veröffentlichungsnummer: WO 2009/090069

(56) Entgegenhaltungen:
- DE-A1-102005 053 875
- US-A- 3 156 152
- US-A- 4 749 322

## Beschreibung

Die Erfindung betrifft eine Verbindungseinrichtung mit einer Schraube und einem Träger gemäß dem Oberbegriff des Hauptanspruchs und ein Verfahren zum Erstellen einer Schraubverbindung.

Solche Verbindungseinrichtungen sind in einer Vielzahl von Anwendungen in der Praxis bekannt, unter Anderem für die Befestigung von Solarpanels auf Trägerstrukturen oder im Karosseriebau in der Automobilindustrie.

Die deutsche Patentanmeldung DE 10 2005 053 875 A1 offenbart eine Schraubverbindung zwischen einem Lager eines Hilfsrahmens und einem rohrförmigen Träger der Karosserie eines Kraftfahrzeuges. Innerhalb eines Längsträgerteils wird ein Verstärkungsteil angeordnet, wobei das Verstärkungsteil und das Trägerteil in der Art Bohrungen aufweisen, dass eine Lagerhülse eingesteckt werden kann, die im Bereich der Bohrungen fixiert wird. In der Lagerhülse ist ein Innengewinde angeordnet, wobei sich dieses an jenem Ende befindet, welches der Anlage zwischen Lager und Träger abgewandt ist. Damit erreicht die Schraubverbindung eine verbesserte Steifigkeit und Festigkeit.

Nachteilig bei der vorangehend beschriebenen Schraubverbindung ist, dass ein zusätzliches Teil, nämlich die Lagerhülse in einem weiteren Montagevorgang in das Längsträgerteil eingesetzt werden muss. Zudem ist vor dem Einsetzen der Lagerhülse ein zusätzlicher Bohr vorgang im Längsträgerteil nötig. Auch benötigt die Lagerhülse gemäß der Lehre der obigen Patentanmeldung ein vorgeschnittenes Gewinde, was einen weiteren Schritt im Fertigungsprozess benötigt. Dadurch ist die Herstellung der genannten Schraubverbindung ein relativ aufwändiger Prozess und kostenintensiv.

Aus dem amerikanischen Patent US 3,156,152 ist eine selbstschneidene Schraube bekannt, die dafür ausgelegt ist übereinander angeordnete Bleche zu verbinden. Die Schraube zeichnet sich dadurch aus, dass sie eine gewindefreie Spitze aufweist, die durch die übereinander liegenden Bleche getrieben werden kann, bevor die Schraube vollends eingeschraubt wird.

Das US-Patent US 4,749,322 offenbart eine Schraube zum Verbinden von dünnen Metallplatten. Die Schraube ist mit einer Beilagscheibe versehen, in der eine Ausnehmung von der Schraube ausgetragenes Material der Metallplatten aufnimmt. Durch den engen Kontakt zwischen der Beilagscheibe und der oberen Metallplatte wird die Schraube gesichert und eine dichte Verbindung zwischen den Metallplatten ermöglicht.

Auch sind im Stand der Technik verschiedenste Profile bekannt, in denen vorgeformte Schraubkanäle ausgebildet sind, in die Schrauben eingedreht werden können. Nachteilig bei solchen Profilen ist, dass in manchen Einsatzbereichen die Stützstrukturen der Profile auf nicht ebenen Grund aufsetzen und somit eine genaue Orientierung der Profile nur schwer möglich ist. Damit ist es sehr zeitaufwändig, die Schraube, das zu montierende Bauteil und das Profil vor dem Einschrauben aufeinander auszurichten.

Aufgabe der vorliegenden Erfindung ist es, eine Verbindungseinrichtung dieser Gattung und ein Verfahren zum Erstellen einer Schraubverbindung bereitzustellen, so dass die sichere, einfach und rasch zu montierende und ökonomisch effiziente Verbindung einer Schraube mit einem Träger ermöglicht wird.

Diese Aufgabenstellung wird mit einer Verbindungseinrichtung gemäß den Merkmalen des Anspruchs 1 und mit einem Verfahren gemäß Anspruch 35 gelöst.

Die erfindungsgemäße Verbindungseinrichtung umfasst eine Schraube und einen Träger, der einen die Schraube aufnehmenden Hohlraum aufweist. Beim Eindrehen der Schraube in den Hohlraum kommt diese in Eingriff mit den begrenzenden Wandungen des Hohlraums. Um eine Verformung der Wandungen des Hohlraums, die eine Verschlechterung des Eingriffs der Schraube nach sich ziehen würde, zu verhindern, ist im Hohlraum eine im Wesentlichen quer zur Schraubenlängsachse angeordnete Membran eingebracht, die die gewünschte geometrische Form des Hohlraums stabilisiert. Die Membran wird beim Einbringen der Schraube von dieser durchdrungen, wobei verformtes Material nach oben und/oder nach unten in Bezug auf die Schraubenlängsachse verschoben wird und somit eine vornehmlich das Gewinde der Schraube wenigstens teilweise umhüllende Schürze bildet, die eine weitere Verbesserung des Eingriffs der Schraube in den Träger bewirkt. Die Schürze wird durch das Material der Membran gebildet, das durch das Einbringen der Schraube nach oben und/oder unten ausweicht und gestützt durch die Wandungen des Hohlraums und/oder weitere Abschnitte des Trägers einen Abschnitt des im Träger ausgeformten Gewindegangs bildet. Dieser Abschnitt des ausgeformten Gewindegangs liegt sehr eng am Gewinde der Schraube an und trägt maßgeblich zu dessen Sicherung bei.

Der Begriff "oben" / "Ober-" bezieht sich auf die dem Kopf der Schraube näher liegende Seite und "unten" / "Unter-" bezieht sich auf die Spitze der Schraube näherliegende Seite der Verbindungseinrichtung

Durch die erfindungsgemäße Ausgestaltung des Trägers und der Schraube entfällt die Notwendigkeit einer Gegenmutter oder eines vorgeformten Gewindes im Träger.

Der Träger mit dem Hohlraum und der Membran kann insbesondere einstückig ausgeführt sein. Für eine Gestaltung aus Metall bietet sich beispielsweise eine Ausbildung des Trägers als Profilträger an, für eine Ausgestaltung des Trägers mittels Kunststoff vorteilhafterweise ein Spritzgussverfahren.

Der Träger umfasst eine im Wesentlichen im rechten Winkel zur Schraubenlängsachse angeordnete Aufstandsfläche, wobei auf dieser der Kopf der Schraube oder ein zwischen dem Kopf der Schraube und dem Träger mittelbar oder unmittelbar in Reibschluss befestigtes Montageteil anliegt. Der Hohlraum endet offen an dieser Aufstandsfläche, um ein einfaches Einführen der Schraube in diesen zu ermöglichen. Der Durchmesser d des Hohlraums kann entlang der Schraubenlängsachse variiert werden, wobei dies sowohl bei sich gegenüberliegenden Seitenwänden des Hohlraums, als auch für eine weitgehend zylindrische Hohlraumform möglich ist. Der Durchmesser des Hohlraums wird so entlang der Schraubenlängsachse Y geändert, dass dieser an der Öffnung des Trägers auf der Seite der Aufstandsfläche den größten Durchmesser und/oder im Bereich des Hohlraums nahe der Membran den größten Durchmesser aufweist, wobei auf der Strecke zwischen diesen Bereichen in Richtung der Schraubenlängsachse der kleinste Durchmesser des Hohlraums vorliegt.

Die Durchmesservariation kann insbesondere durch die Gestaltung einer konkaven Seitenwand erreicht werden, wobei dies entweder durch eine Verdickung der Seitenwand in einem gewissen Bereich oder durch eine gebogene Seitenwand erreicht werden kann. Das wesentliche Merkmal hierbei ist, dass in einem zentralen Bereich des Hohlraums ein geringerer Durchmesser/Abstand zwischen den Seitenwänden vorliegt. Dadurch kann ein besseres Anliegen der im Hohlraum gebildeten Gewindegänge im Gewinde der Schraube erreicht werden, da die so geformten Seitenwände des Hohlraums einen höheren Gegendruck auf die Schraube während dem Einschrauben ermöglichen. Weiterhin kann, wenn die Schraube fest angezogen wird und damit eine hohe Kraft im Bereich der Schürze nach oben auftritt, ein Ausknicken der Seitenwände verhindert, und sogar eher der gegenteilige Effekt, nämlich eine sich selbst verstärkende Eindrückung der Seitenwände an das Gewinde erreicht werden.

Der kleinste Durchmesser d des Hohlraums im rechten Winkel zur Schraubenlängsachse kann kleiner als der Außendurchmesser Da des Gewindes der Schraube sein. Der Begriff "Durchmesser" kann sich sowohl auf den Durchmesser eines im Wesentlichen zylindrischen Hohlraums beziehen, wie auch auf den Abstand von zwei Seitenwänden eines Hohlraums, insbesondere wenn der Träger als Profilträger ausgeführt ist und die Schraube in Eingriff mit zwei im Wesentlichen parallel angeordneten Seitenwänden des Hohlraums ist. Dadurch, dass der kleinste Durchmesser d des Hohlraums senkrecht zur Schraubenlängsachse größer ist als der Kerndurchmesser Di des Gewindes, kann durch eine formende/schneidende Wirkung der Schraube in einer Ausführungsform der Erfindung einfach ein Gewinde im Hohlraum erzeugt werden.

Wenn der Träger als Profil ausgebildet ist, bildet der Hohlraum innerhalb des Trägers einen Kanal in Längsrichtung des Profils, wobei damit eine beliebige Positionierung der Schrauben in Längsrichtung des Profils ermöglicht wird, was eine Vielzahl von Befestigungsmöglichkeiten und somit eine geometrisch sehr flexible Verbindungseinrichtung ermöglicht. Damit kann eine Schraube innerhalb des Hohlraums auch leicht schräg angeordnet werden, sowie auf der ganzen Länge des Kanals eingesetzt werden. Genaues Ausrichten der Schraube ist somit für eine sichere Verbindung in einem gewissen Toleranzbereich nicht mehr nötig, und die Schraube kann entlang des Profils auf beliebiger Position eingesetzt werden, was die Montagegeschwindigkeit der Verbindungseinrichtung um ein Vielfaches steigert. Insbesondere gilt dies für Anwendungen wie das Anbringen von Solarpanels auf Dachstrukturen, da hier die Träger auf Grund ihrer Befestigung an einem gewöhnlichen Hausdach, das nur eine sehr ungenaue Montagefläche bietet, sehr schwer genau aufeinander ausgerichtet werden können.

Der Hohlraum weist in einer bevorzugten Ausführungsform insbesondere zwei Seitenwände auf, wobei die Membran, die im Wesentlichen im rechten Winkel zu den Seitenwänden angeordnet ist, die Seitenwände verbindet, und somit den Hohlraum geometrisch stabilisiert, und eine einfache Ausformung der Gewindestruktur im Hohlraum ermöglicht. Die Seitenwände weisen im Wesentlichen zueinander den bereits oben definierten Abstand d auf, wobei sich in dieser Ausführungsform der Abstand nicht auf einem Durchmesser, sondern auf eine im Wesentlichen parallele Beabstandung der Seitenwände bezieht. Der Träger kann an mehreren Seiten Hohlräume aufweisen, wobei diese vorzugsweise zueinander im rechten Winkel angeordnet sind. Damit wird eine Befestigungsmöglichkeit mittels der erfindungsgemäßen Verbindungseinrichtung an mehreren Seiten ermöglicht.

Um eine hohe Festigkeit und Beständigkeit der Verbindungseinrichtung zu ermöglichen, ist es insbesondere vorteilhaft, dass der Werkstoff der Schraube eine höhere Festigkeit aufweist als der Werkstoff des Trägers. Dies ermöglicht auch eine Verbesserung der Gewindeausbildung beim formenden/schneidenden Eingriff der Schraube in den Träger beim Eindrehen der Schraube. Die Schraubenspitze kann insbesondere so ausgebildet sein, dass sie einen gleichmäßigen Formwiderstand beim Einbringen durch die Membran ermöglicht, so dass ein relativ gleichmäßiges Moment zum Eindrehen der Schraube in die Membran nötig ist, was ein ergonomischeres Einschrauben ermöglicht.

In einer vorteilhaften Ausführungsform der Erfindung weist das Gewinde der Schraubenspitze insbesondere eine konische Form auf, um einen einfacheren Eingriff in die Membran zu ermöglichen. Eine Gewinde formende Schraube mit einer formgebenden Spitze ermöglicht eine einfache Verformung der Wandungen des Hohlraums zu Gewindegängen ohne Spanabtrag. Zudem kann die formgebende Spitze einen verformenden Durchgang der Schraube durch die Membran ermöglichen, so dass auch hierbei kein Spanabtrag auftritt. Genauso kann die Schraube aber auch in einer anderen bevorzugten Ausführungsform eine Schneidspitze aufweisen, so dass die Schraube unter Abtragung von Spänen ein Gewinde in die Wandungen des Hohlraums und die Membran einbringt. Damit ein Blockieren der Schraube durch abgetragene Späne verhindert wird, kann insbesondere eine an die Schneidkante angrenzende Vertiefung zur Aufnahme von Spänen vorgesehen sein.

Um die Schraube über die Membran hinaus noch weiter zu stabilisieren und den Eingriff der Schraube in den Träger zu sichern, kann ein Verlängerungsschenkel über die Membran hinaus im Wesentlichen in Richtung der Schraubenlängsachse einseitig vorstehen. Der Verlängerungsschenkel kann im Falle des zylindrischen Hohlraums insbesondere eine zylindrische Form aufweisen, und im Falle eines Hohlraums mit im Wesentlichen parallelen Seitenwänden, stehen zwei im Wesentlichen parallele Verlängerungsschenkel über die Membran in Richtung der Schraubenlängsachse über. Durch die Verlängerungsschenkel wird insbesondere eine Erhöhung des höchsten auf die Schraube aufbringbaren Moments in wenigstens einer Richtung orthogonal zur Schraubenlängsachse, eine erhöhte Beständigkeit der Schraube gegen Ausreißen in Richtung der Schraubenlängsachse, sowie gegen ungewolltes Ausdrehen der Schraube ermöglicht.

Am Ende der Verlängerungsschenkel können diese wenigstens einen nach innen gerichteten Vorsprung aufweisen, wobei der Vorsprung im Falle eines zylindrischen Hohlraums eine an ihrem äußersten Radius an den Verlängerungsschenkeln befestigte Scheibe mit einer konzentrischen Ausnehmung in der Mitte darstellt. Im Falle eines Hohlraums mit im Wesentlichen parallelen Seitenwänden kann dieser zwei aufeinander ausgerichtete, im Wesentlichen in der Ebene im rechten Winkel zur Schraubenlängsachse angeordnete Vorsprünge aufweisen. Die Vorsprünge greifen zusätzlich in das Gewinde der eingebrachten Schraube ein und sichern diese somit gegen Ausreißen entlang der Schraubenlängsachse und Ausdrehen der Schraube.

Zudem werden, wenn die Vorsprünge durch die Schraube nach außen gedrückt werden, die Seitenwände des Hohlraums um das durch die Membran gebildete Hebelgelenk nach innen gedrückt, womit der Eingriff des Gewindes der Schraube in den Gewindegängen der Seitenwand des Hohlraums zusätzlich gesichert wird.

Der Verlängerungsschenkel kann die durch den Membrandurchtritt der Schraube erzeugte Schürze wenigstens teilweise umgeben, so dass das im Hohlraum ausgebildete Gewinde in engem Eingriff mit der Schraube gehalten wird und somit eine sichere Verbindung der Schraube mit dem Träger ermöglicht.

Das Gewinde der Schraube sollte sich für eine sichere Verbindung wenigstens auf Höhe der Membran befinden, wenn sich die Schraube in einem eingeschraubten Zustand befindet.

Die Membran kann in einer bevorzugten Ausführungsform vor ihrer Verformung im Wesentlichen eben sein, wobei die Höhe der Membran in Richtung der Schraubenlängsachse geringer ist als ihre Ausbreitung im rechten Winkel zur Schraubenlängsachse. In einer anderen bevorzugten Ausführungsform kann die Membran vor ihrer Verformung in dem von der Schraube durchdrungenen Abschnitt im Wesentlichen trichterförmig sein, um dadurch eine einfachere Ausformung des Gewindes in der Membran zu ermöglichen. Einfacheres Einbringen der Schraube durch die Membran und eine verbesserte Ausformung des Gewindes kann durch eine wenigstens an einer Stelle der Membran verminderte Dicke der Membran erreicht werden, die einen einfachen Eingriff der Schraube in und Durchtritt der Schraube durch die Membran ermöglicht. Zum gleichen Zweck kann die Membran auch an wenigstens einer Stelle eine Öffnung und/oder einen Längsschnitt aufweisen, wodurch das für den Durchtritt der Schraube erforderliche Moment noch weiter reduziert werden kann.

Bei einer Ausgestaltung des Trägers als Profilträger kann eine Längskerbe in der Mitte der Membran entlang der Längsrichtung des Profils die Wirkung der Membran als Hebelgelenk für die Vorsprünge verbessern, da eine einfache Verformung der Membran an dieser Stelle reduzierter Materialdicke möglich ist.

Die Verbindungseinrichtung kann dafür ausgelegt sein, dass wenigstens ein Montageteil mittelbar oder unmittelbar zwischen einem Schraubenkopf der Schraube und dem Träger in Eingriff ist, wobei die mittelbare Verbindung über eine Deckschiene erreicht werden kann, die wenigstens eine Schraubenkopfangriffsfläche und eine Montageteilangriffsfläche aufweist. Die Schraubenkopfangriffsfläche ist mit einem Schraubenkopf der Schraube in Kontakt, und die Montageteilangriffsfläche ist mit dem zu befestigten Montageteil in Kontakt.

In einer vorteilhaften Ausführungsform kann im Träger der Verbindungseinrichtung über dem Hohlraum ein Schraubkanal angeordnet sein. Der Schraubkanal weist Vorsprünge auf, die eine Öffnung definieren, die einen größeren Durchmesser verglichen mit dem Durchmesser des Hohlraums aufweist. Dies ermöglicht, dass wahlweise der Schraubkanal oder der Hohlraum verwendet werden können um Montageteile mit dem Träger zu verbinden. Die Verbindung über den Schraubkanal ermöglicht eine hohe Präzision der Befestigung, während die Verbindung über den Hohlraum ein schnelleres Verbinden ermöglicht. Die Vorsprünge dienen als Gegenlager und ermöglichen, dass Schrauben, die zum Einschrauben in dem Hohlraum gedacht sind, ohne ungewollten Kontakt mit den Vorsprüngen des Schraubkanals einschraubt werden können.

In den Schraubkanal kann ein Nutenstein eingelegt werden, der ein Gewinde aufweist In dieses Gewinde kann eine Schraube eingeschraubt werden, um eine Verbindung zu ermöglichen. Der Nutenstein bildet somit ein sicheres Widerlager für verschiedene Schraubenarten.

In den Schraubkanal kann alternativ der Kopf einer Schraube eingelegt werden, wobei deren Gewinde von dem Träger hervorsteht. Auf diese Schraube kann eine Mutter geschraubt werden um Montageteile am Träger zu befestigen.

Die Deckschiene kann weiterhin eine Öffnung zum Durchführen der Schraube aufweisen, wobei die Öffnung insbesondere eine Fase an ihrer Seitenwand aufweisen kann, damit ein passend geformter Schraubenkopf bündig mit der Oberfläche der Deckschiene versenkt werden kann. Weiterhin kann die Deckschiene einen Steg aufweisen, der an wenigstens ein zu befestigendes Montageteil angrenzt und somit eine Sicherung der Montage in einer Richtung im rechten Winkel zur Schraubenlängsachse ermöglicht.

Die Deckschiene kann mit wenigstens zwei zu befestigenden Montageteilen in Eingriff sein, wobei jeweils wenigstens ein zu befestigendes Montageteil an einer der beiden Seiten des Stegs angrenzt. An der Montageteilangriffsfläche der Deckschiene können vorteilhafterweise Mittel zur Erhöhung der maximal übertragbaren Reibkraft vorgesehen sein, insbesondere mehrere kleine Spitzen, oder eine rauhe Oberflächenstruktur, die sich in das zu befestigende Montageteil eindrücken können und somit dieses gegen Verrutschen sichert. Die Montageteile können beispielsweise Solarpanels sein.

Die Schraube kann einen Schraubenkopf aufweisen, der an seiner Unterseite angeschrägt ist, um einen optimalen Eingriff in die Deckschiene zu ermöglichen. Weiterhin kann die Schraube einen Schraubenkopf aufweisen, der einen Kopfauflageabschnitt zum mittelbaren oder unmittelbaren Aufbringen der Klemmkraft der Schraube auf das Montageteil aufweist, und einen Werkzeugeingriffsabschnitt, wobei Letzterer so gestaltet sein kann, dass dieser vom Kopfauflageabschnitt getrennt werden kann. Dadurch kann eine Diebstahlsicherung für das durch die Verbindungseinrichtung befestigte Montageteil erreicht werden, da der Schraubenkopf ohne den Werkzeugeingriffsabschnitt an seinem Kopfauflageabschnitt, der insbesondere in einer Deckschiene versenkt sein kann, keinerlei Werkzeugeingriffsmittel aufweist.

Der Schraubenkopf ist insbesondere so ausgelegt, dass der Werkzeugeingriffsabschnitt vom Kopfauflageabschnitt abschert, wenn das daran angreifende Moment einen gewissen Wert überschreitet. Insbesondere wird das Abscheren durch eine Nut im Schraubenkopf zwischen dem Kopfauflageabschnitt und dem Werkzeugeingriffsabschnitt ermöglicht. In einer bevorzugten Ausführungsform der Erfindung ist das Moment, bei dem der Werkzeugeingriffsabschnitt vom Kopfauflageabschnitt abschert geringer als das Ausreißmoment der Schraube aus dem Träger, und höher als das Moment, das auf die Schraube aufgebracht werden muss, damit diese die Membran durchdringt.

Im Folgenden werden bevorzugte Ausführungsformen der erfindungsgemäßen Verbindungseinrichtung anhand von Abbildungen beschrieben.
- Figur 1: zeigt eine erste Ausführungsform der Erfindung als Schnittansicht eines Trägers, zwei Montageteilen und einer Deckschiene, die mittels einer Schraube verbunden sind.
- Figur 2: zeigt eine zweite Ausführungsform der Erfindung mit der Schraube im nicht eingebrachten Zustand, wobei hierin die Schraube eine Schneidkante, und der Träger Hohlräume an zwei seiner Seitenflächen aufweist,
- Figur 3: ist eine Seitenansicht einer Schraube zur Verwendung in der erfindungsgemäßen Verbindungseinrichtung.
- Figur 4 bis Figur 7: zeigen als Bildfolge das Einbringen der Schraube in der Verbindungseinrichtung der ersten Ausführungsform der Erfindung.
- Figur 8: zeigt eine Schnittansicht einer dritten Ausführungsform der Erfindung mit einem Träger mit veränderter Hohlraumgeometrie.
- Figur 9: zeigt eine Schnittansicht einer vierten Ausführungsform der Erfindung mit einem Träger mit zusätzlichen Schraubkanälen.
- Figur 10: zeigt die vierte Ausführungsform gemäß Figur 9 mit einem eingelegten Nutenstein und einer Hammerkopfschraube.
- Figur 11: zeigt eine Ansicht des Trägers der vierten Ausführungsform gemäß Figur 9 von oben beim Einlegen der Hammerkopfschraube.

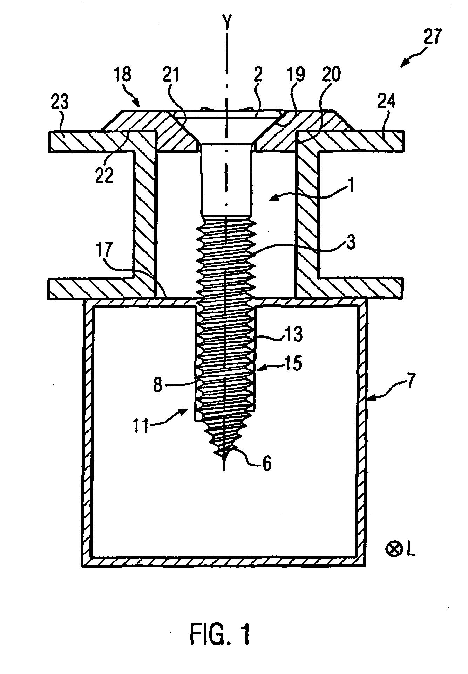

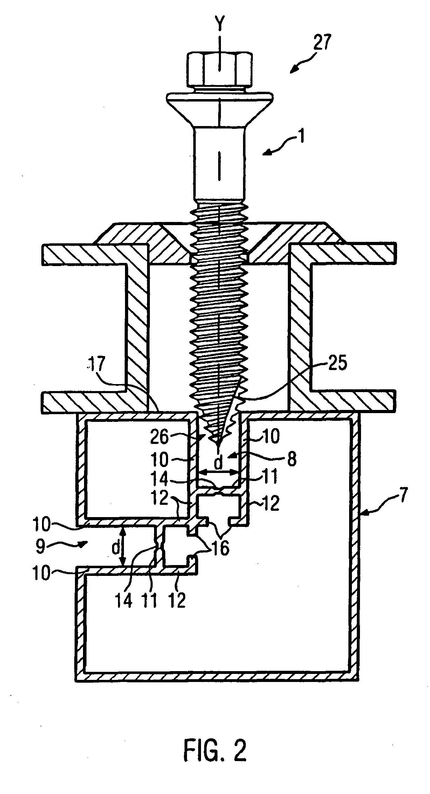

In Figur 1 ist eine erste Ausführungsform der erfindungsgemäßen Verbindungseinrichtung 27 dargestellt. Darin ist die Schraube 1 vollständig in den Hohlraum 8 eingedreht, und bildet mit dessen Wandungen einen Gewindegang 13 aus. Im Bereich der Membran 11 (siehe Figur 2) bildet sich durch den Durchgang der Schraube eine Schürze 15 aus, die einen Teil des Gewindegangs 13 bildet. Der Träger 7 ist als Profilträger ausbildet, und weist einen im Wesentlichen gleichbleibenden Querschnitt entlang seiner Längsrichtung L auf, die sich orthogonal zur Zeichnungsebene erstreckt. Die Schraube weist eine Schraubenlängsachse Y auf, die im Wesentlichen im rechten Winkel zur Aufstandsfläche 17 angeordnet ist. Auf der Aufstandsfläche 17 sind zwei Montageteile 23, 24 angeordnet, die sich im Reibschluss mit der Aufstandsfläche 17 befinden. Um die nötige Kraft für den Reibschluss zu ermöglichen, greift eine Deckschiene 18 mit einer Montageteilangriffsfläche 22 in jedes der Montageteile 23, 24 ein. Die Deckschiene 18 weist eine Schraubenkopfangriffsfläche 21 auf, die eine Kraftübertragung der Schraube 1 zur Deckschiene 18 ermöglicht. Die Schraube 1 ist durch eine Öffnung 19 der Deckschiene 18 geführt. Des Weiteren weist die Deckschiene 18 einen Steg 20 auf, der an die Montageteile 23, 24 so angrenzt, so dass dieser die Montageteile 23, 24 während des Schraubvorgangs und während des verschraubten Zustands der Verbindungseinrichtung 27 in wenigstens einer Richtung orthogonal zur Schraubenlängsachse Y zusätzlich sichern kann. In dieser Ausführungsform der Erfindung ist der Schraubenkopf 2 im Wesentlichen bündig mit der Deckschiene 18 und das Gewinde 3 der Schraube 1 erstreckt sich über die gesamte Länge des Hohlraums 8. Die Schraubenspitze 6 steht über den Hohlraum 8 und Verlängerungsschenkel 12 (siehe Figur 2) über, wenn die Schraube 1 im eingebrachten Zustand ist.

In Figur 2 ist die Verbindungseinrichtung 27 in einer zweiten bevorzugten Ausführungsform dargestellt, wobei sich die Schraube 1 hier in einem noch nicht eingebrachten Zustand befindet. Der Hohlraum 8 ist baugleich zu dem in der ersten Ausführungsform der Erfindung dargestellten Hohlraum, und weist eine gleich gestaltete Membran 11, Verlängerungeschenkel 12 und Vorsprünge 16 auf. Damit beziehen sich die folgenden Ausführungen zum Hohlraum 8, der Membran 11, den Verlängerungsschenkeln 12 und den Vorsprüngen 16 sowohl auf die erste Ausführungsform, dargestellt in Figur 1, als auch auf die zweite Ausführungsform, dargestellt in Figur 2. Der Unterschied der zweiten Ausführungsform zur ersten Ausführungsform ist zunächst, dass die Schraube 1 eine Schneidkante 25 an einer Schneidspitze 26 aufweist, um einen spanabtragenden Eingriff der Schraube in dem Hohlraum 8, die Membran 11, die Verlängerungsschenkel 12 und die Vorsprünge 16 zu ermöglichen.

Die Membran ist im Wesentlichen orthogonal zu den Seitenwänden 10 des Hohlraums angeordnet und weist in ihrer Mitte beim Durchtritt der Schraubenlängsachse eine Kerbe 14 auf, wobei diese Kerbe nur an einer Stelle, oder als Vertiefung entlang der ganzen Längsachse L des Profils vorgesehen sein kann. Ausgehend von der Membran 11 stehen im Wesentlichen die Seitenwände 10 fortführende Verlängerungsschenkel 12 über, die an ihren Enden im Wesentlichen orthogonal angeordnete Vorsprünge 16 aufweisen, wobei sich all diese Bereiche des Trägers 7 bei eingebrachter Schraube 1 im Eingriff mit deren Gewinde 3 befinden.

Die Seitenwände 10 des Hohlraums 8 grenzen im Wesentlichen im rechten Winkel an die Aufstandsfläche 17 des Trägers 7. Der Hohlraum 8 hat vor dem Einbringen der Schraube 1 einen kleinsten Durchmesser d, wobei sich der Begriff "Durchmesser" hier auf den Abstand der beiden parallelen Seitenwände 10 bezieht. Der Träger 7 weist an einer zweiten Seite seines im Wesentlichen quadratischen Profils einen zweiten Hohlraum 9 auf, der ebenfalls eine Membran 11, Verlängerungsschenkel 12 und Vorsprünge 16 aufweist, die im Wesentlichen baugleich zu den korrespondierenden bisher beschriebenen Bereichen beim ersten Hohlraum 8 des Trägers 7 sind, allerdings um 90° versetzt an einer zweiten Seite des Trägers 7 angeordnet sind. Auch in den Hohlraum 9 kann eine Schraube 1 angebracht werden, um weitere Montageteile zu befestigen.

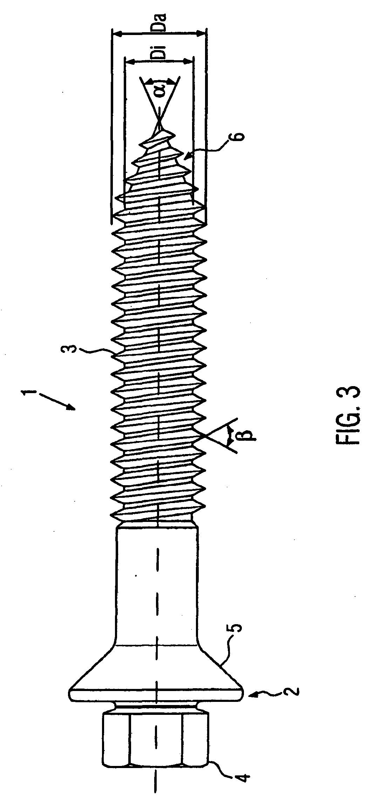

In Figur 3 ist eine Schraube 1 dargestellt, die in der erfindungsgemäßen Verbindungseinrichtung verwendet wird. Die Schraube 1 weist einen Werkzeugeingriffsabschnitt 4 auf, der insbesondere mit einem Sechskantprofil, aber auch mit beliebigen anderen im Stand der Technik bekannten Werkzeugeingriffen versehen sein kann. Der Werkzeugeingriffsabschnitt 4 ist mit einem Kopfauflageabschnitt 5 der Schraube 1 verbunden, wobei die Verbindung eine Nut aufweisen kann, so dass ein einfacheres Abscheren des Werkzeugeingriffabschnitts 4 ermöglicht werden kann. Der Kopfauflageabschnitt 5 der Schraube 1 ist in der Verbindungseinrichtung mit eingebrachter Schraube 1 in Kontakt mit der Schraubenkopfangriffsfläche 21 der Deckschiene 18. Die Schraube 1 umfasst ein Gewinde 3, das einen inneren Kerndurchmesser Di und einen Außendurchmesser Da aufweist. Dabei ist der Abstand d der Seitenwände des Hohlraums 8, 9 größer als der Kerndurchmesser Di und kleiner als der Außendurchmesser Da der Schraube 1. Die einzelnen Gewindegänge weisen einen Winkel β ihrer Flanken auf und die Schraube hat eine konische Spitze 6 mit dem Winkel α. Die hier dargestellte Schraube ist als formende Schraube ausgeführt, so dass sie ohne Spanabtrag ein Gewinde in den Hohlraum 8, 9 die Membran 11, die Verlängerungsschenkel 12 und die Vorsprünge 16 formen kann.

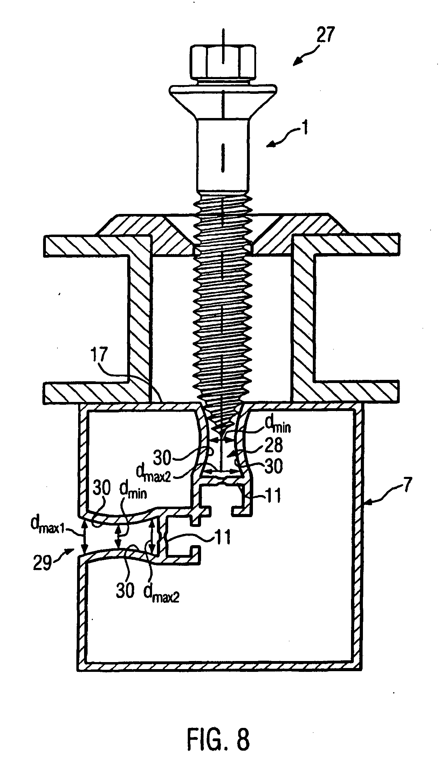

Figur 8 zeigt eine dritte Ausführungsform der Erfindung mit einem Träger 7 mit veränderter Hohlraumgeometrie, worin der Abstand der Seitenwände 30 entlang der Schraubenlängsrichtung γ der in den Hohlraum 28 eingedrehten Schraube variiert wird. Dabei weist der Hohlraum 28 in seinem zentralen Bereich einen kleinsten Durchmesser/Abstand dₘᵢₙ auf und in seinem Randbereich nahe der Membran 11 einen größeren Durchmesser/Abstand dₘₐₓ₂, sowie nahe der Öffnung des Hohlraums 28 an der Außenseite des Trägers 7 einen größeren Durchmesser/Abstand dₘₐₓ₁. Analog zum Ausführungsbeispiel von Figur 2 kann auch ein zweiter Hohlraum 29 an der Seite des Trägers 7 vorgesehen sein, der in seinem Aufbau dem Hohlraum 28 weitgehend entspricht. Die Einengung mit dem Durchmesser/Abstand dₘᵢₙ kann insbesondere auch etwas weiter unten im Hohlraum 28, 29 angeordnet sein, um ein einfacheres und sicheres anfängliches Eingreifen der Schraube 1 beim Eindrehen zu ermöglichen.

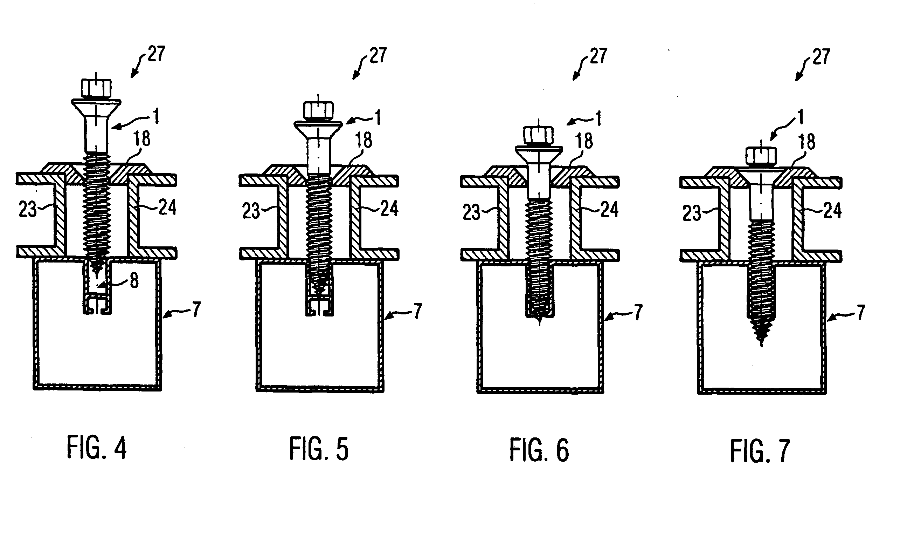

In Figur 4 bis 7 ist das Einbringen der Schraube 1 in den Träger 7, gemäß der Verbindungseinrichtung der ersten Ausführungsform dargestellt. Zunächst werden die Montageteile 23, 24 auf der Aufstandsfläche 17 des Trägers 7 angeordnet, dann wird die Deckschiene 18 auf die Montageteile 23, 24 aufgesetzt und die Schraube 1 so durch die Öffnung 19 der Deckschiene 18 durchgeführt, so dass diese an den Wandungen des Hohlraums 8 mit einem Gewindegang ihres Gewindes 3 anliegt.

Dann wird die Schraube 1 bis zum Zustand in Figur 5 mittels eines nicht dargestellten Werkzeugs eingedreht, wobei das Moment bis zum Anstoßen der Schraubspitze 6 an die Membran 11 im Wesentlichen gleich bleibt. Darauf folgend wird die Schraube 1 bis zum in Figur 6 gezeigten Zustand durch das nicht dargestellte Werkzeug eingedreht, wobei die Membran 11 nun zu einer Schürze 15, die einen Teil des Gewindegangs 13 des Trägers 7 bildet, umgeformt wird. Schließlich wird die Schraube unter wiederum geringerem Moment durchgedreht bis zu dem in Figur 7 dargestellten Zustand, so dass sich eine Kraftwirkung zwischen Deckschiene 18 und Aufstandsfläche 17 des Trägers ergibt, die die Montageteile 23, 24 in Reibschluss sichert. Wird weiterhin ein gewisses Moment mittels eines nicht dargestellten Werkzeugs auf den Werkzeugeingriffsabschnitt 4 des Schraubenkopfes 2 aufgebracht, schert der Werkzeugeingriffsabschnitt 4 unter dem bislang höchsten aufgebrachten Moment des Einschraubvorgangs ab und die Verbindungseinrichtung befindet sich in dem in Figur 1 dargestellten Zustand. Damit wird ein Lösen der Schraube 1 erschwert und somit ein Diebstahlschutz für die befestigten Montageteile 23, 24 ermöglicht.

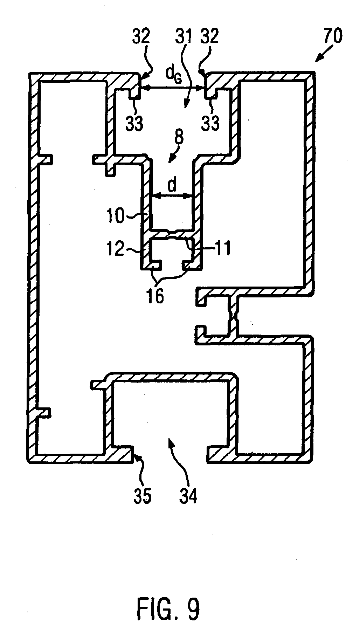

Figur 9 zeigt einen Träger 70 für eine vierte Ausführungsform der erfindungsgemäßen Verbindungseinrichtung. Dabei ist über dem Hohlraum 8 ein Schraubkanal 31 angeordnet, der sich ebenfalls in Längsrichtung des Trägers 70 erstreckt. An seinem oberen Ende weist der Schraubkanal 31 Vorsprünge 32 auf, die sich im Wesentlichen quer zur Schraubenlängsachse erstrecken. Die Vorsprünge 32 definieren eine Öffnung im Träger 70, die einen Durchmesser d_{G} aufweist, der insbesondere größer ist als der Durchmesser d des Hohlraums. Schrauben, die in den Hohlraum 8 eingebracht werden, treten somit nicht ungewollt in Kontakt mit den Vorsprüngen 32 des Schraubkanals 31. Um eine definierte Anlagefläche zu ermöglichen weisen die Vorsprünge 32 die Anlagevorsprünge 33 auf. Der Träger 70 weist weiterhin einen konventionellen Schraubkanal 34 mit Vorsprüngen 35 auf.

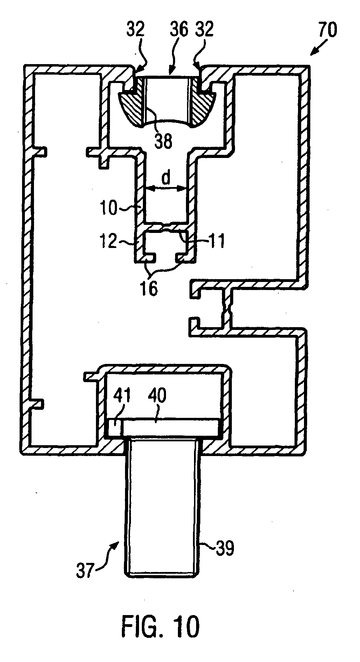

Wie in Figur 10 dargestellt kann in den zusätzlichen Schraubkanal 31 ein Nutenstein 36 eingelegt werden, der ein Gewinde 38 aufweist, wodurch konventionelle Schrauben mit dem Nutenstein 36 verbunden werden können.

Hammerkopfschrauben 37 können mit ihrem Kopf 40 in den Schraubkanal 34 eingelegt werden, wobei es genauso möglich ist die Hammerkopfschrauben 37 in den Schraubkanal 31 einzulegen.

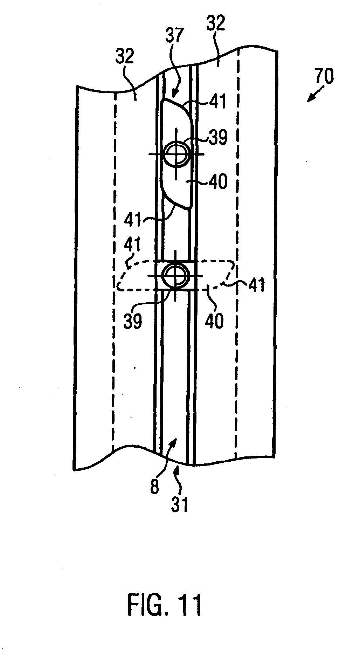

Das Einlegen der Hammerkopfschrauben 37 ist in Figur 11 mittels einer Ansicht von oben auf den Träger 70 dargestellt. Die Hammerkopfschrauben weisen an ihrem Kopf 40 eine Fase 41 auf, um ein Verdrehen im Schraubkanal 31, 34 zu ermöglichen. Zunächst werden die Hammerkopfschrauben 39 so über dem Träger 70 angeordnet, dass sich der Hammerkopf 40 parallel zu der Öffnung des Schraubkanals 31 erstreckt, wodurch der Kopf 40 in den Schraubkanal 31 bewegt werden kann. Durch Verdrehen der Hammerkopfschraube 37 greift der Kopf 40 dann in die Vorsprünge 32 ein. Wenn die Hammerkopfschraube 37 um 90° verdreht ist, liegt der Kopf 40 so an den Seiten des Schraubkanals 31 an, dass ein weiteres Verdrehen nicht mehr möglich ist. Das Einlegen der Hammerkopfschraube 37 in den konventionellen Schraubkanal 34 wird identisch durchgeführt.

Eine Verbindung mittels dem Schraubkanal 31 hat beispielsweise den Vorteil, dass in Bereichen, wo eine feinere Ausrichtung der Verbindung notwendig ist, eine konventionelle Schraube kombiniert mit dem Nutenstein 36 oder die Hammerkopfschraube 37 verwendet wird. In Bereichen, wo es auf ein schnelleres Einschrauben der Schraube ankommt, können Schrauben direkt in den Hohlraum 8 eingeschraubt werden. Bereiche mit höheren Genauigkeitsanforderungen sind beispielsweise die ersten Meter eines Feldes für die Befestigung von Solarmodulen, da die Solarmodule dort sehr genau ausgerichtet werden müssen.

Der Schraubkanal ist so über dem Hohlraum angeordnet, dass sowohl die erfindungsgemäße Verbindung mittels Einschrauben einer Schraube in den Hohlraum, als auch eine Verbindung mittels Einlegen einer Schraube oder eines Nutensteins in den Schraubkanal erfolgen kann, wobei sich die in den Schraubkanal und in den Hohlraum eingebrachten Schrauben vorteilhafterweise parallel erstrecken.

Das Verfahren zum Erstellen der Verbindungseinrichtung umfasst in etwa die folgenden Schritte:
(i) Orientieren einer Schraube 1 über einem Träger 7, sodass die Schraubenlängsachse Y in einen Hohlraum 8 des Trägers 7 zeigt,
(ii) Eindrehen der Schraube 1 in den Hohlraum 8 bis zur einer Membran 11, wobei sich das Gewinde 3 der Schraube 1 im Eingriff mit dem Träger 7 in dessen Hohlraum 8 befindet,
(iii) Weiteres Eindrehen der Schraube 1, sodass diese durch die Membran 11 durchtritt, und
(iv) Eindrehen der Schraube 1 bis in die Endposition, in der der Schraubenkopf 2 der Schraube 1 an dem Träger 7 oder einem Montageteil 23, 24 mittelbar oder unmittelbar anliegt.

Weiterhin kann beim Eindrehen in Schritt (ii) der Eingriff der Schraube 1 im Träger 7 durch plastische Verformung des Hohlraums 8 durch die Schraube 1 geschaffen werden.

Alternativ kann beim Eindrehen in Schritt (ii) der Eingriff der Schraube 1 im Träger 7 durch spanabtragendes Wirken der Schraube 1 in dem Hohlraum 8 geschaffen werden.

Der Durchtritt der Schraube 1 durch die Membran 11 kann durch plastische Verformung der Membran 11 durch die Schraube 1 beim Eindrehen in Schritt (iii) geschaffen werden.

Dabei wird die Membran 11 als Fließmasse nach oben/unten von der Schraube 1 verdrängt und dort von den Seitenwänden 10 des Hohlraums 8, 9 und/oder den Verlängerungsschenkeln 12 gestützt und bildet somit einen eng an der Schraube 1 anliegenden Teil der Gewindegänge 13 des Hohlraums 8, 9.

Das Eindrehen in Schritt (iv) kann weiterhin den insbesondere umformenden Eingriff der Schraube 1 in wenigstens einen Verlängerungsschenkel 12, der nach der Membran 11 im Wesentlichen in Schraubenlängsrichtung Y weitergeführt ist, umfassen.

Zusätzlich kann das Eindrehen in Schritt (iv) weiterhin den insbesondere umformenden Eingriff der Schraube 1 in wenigstens einen Vorsprung 16, der von dem Verlängerungsschenkel 12 im Wesentlichen orthogonal zur Schraubenlängsrichtung Y in Richtung der Schraube 1 vorsteht, umfassen.

Das Moment zum Einschrauben kann auf einen Werkzeugeingriffsabschnitt 4 des Schraubenkopfes 2 aufgebracht werden, und an das Verfahren kann sich der Schritt (v) anschließen, der das Aufbringen eines Momentes auf den Werkzeugeingriffsabschnitt 4 umfasst, sodass der Werkzeugeingriffsabschnitt 4 von einem Kopfauflageabschnitt 5 des Schraubenkopfes 2 abschert.

Im Folgenden werden weitere vorteilhafte Ausgestaltungen der Verbindungseinrichtung beschrieben.

In einer Ausführungsform weisen die Seitenwände 10 im Wesentlichen zueinander einen Abstand d auf.

Vorteilhafterweise hat der Träger 7 wenigstens im Bereich der Verbindungseinrichtung einen rechteckigen Profilquerschnitt.

In einer Ausführungsform weist der Träger 7 mehrere, vorzugsweise orthogonal zueinander angeordnete Hohlräume 8, 9, 28, 29 auf.

Der Werkstoff der Schraube 1 weist vorteilhafterweise eine höhere Festigkeit auf, als der Werkstoff des Trägers 7.

In einer Ausführungsform weist die Schraubenspitze 6 eine beim Einbringen durch die Membran 11 gleichmäßigen Formwiderstand bedingende Form auf.

Das Gewinde 3 an der Schraubenspitze 6 kann insbesondere eine konische Form aufweisen.

In einer Ausführungsform weist die Schraube 1 eine Schneidspitze 26 auf.

Vorteilhafterweise weist die Schraube 1 an ihrer Schneidspitze 26 eine Schneidkante 25 auf, die von der Spitze 6 bis in einen zylindrischen Bereich der Schraube 1 geführt ist, und insbesondere eine angrenzende Vertiefung zur Aufnahme von Spänen aufweist.

In einer Ausführungsform ist der Vorsprung 16 im Wesentlichen in der Ebene im rechten Winkel zur Schraubenlängsachse Y angeordnet.

Vorteilhafterweise weisen die zwei Verlängerungsschenkel 12 jeweils einen Vorsprung 16 auf, die im Wesentlichen sich gegenüberliegend angeordnet sind.

Der Verlängerungsschenkel 12 kann jeweils mehrere Vorsprünge 16 umfassen.

Vorteilhafterweise umgibt der Verlängerungsschenkel 12 die Schürze 15 wenigstens teilweise.

In einer Ausführungsform befindet der Verlängerungsschenkel 12 sich im Eingriff mit dem Gewinde 3 der Schraube 1.

Bei der eingebrachten Schraube 1 befindet sich das Gewinde 3 vorteilhafterweise wenigstens auf Höhe der Membran 11.

Vorteilhafterweise wird der Hohlraum 8, 9, 28, 29 bei Einbringen der Schraube 1 so verformt, dass dieser einen Gewindegang 13 für die Schraube 1 bildet.

In einer Ausführungsform ist die Membran 11 vor ihrer Verformung im Wesentlichen eben.

Gemäß einer anderen Ausführungsform ist die Membran 11 vor ihrer Verformung in dem von der Schraube 1 durchdrungenen Abschnitt im Wesentlichen trichterförmig.

Die Membran 11 kann vor ihrer Verformung durch die Schraube 1 an wenigstens einer Stelle 14 eine verminderte Dicke, insbesondere eine Kerbe, aufweisen.

Die Membran 11 kann vor ihrer Verformung durch die Schraube 1 an wenigstens einer Stelle 14 eine Öffnung und/oder einen Längsschnitt aufweisen.

In einer Ausführungsform ist wenigstens ein Montageteil 23,24 mittelbar oder unmittelbar zwischen einem Schraubenkopf 2 der Schraube 1 und dem Träger 7 in Eingriff.

Vorteilhafterweise ist der Schraubkanal 31 so ausgebildet, dass darin ein Nutenstein 36 angeordnet werden kann, der ein Gewinde 38 aufweist, in das eine Schraube eingeschraubt werden kann.

Der Schraubkanal 31 kann so ausgebildet sein, dass darin der Kopf 40 einer Schraube 37 angeordnet werden kann, wobei das Gewinde 39 der Schraube 37 von dem Träger 7, 70 hervorsteht.

## Patentansprüche

1. Verbindungseinrichtung (27), mit
einer Schraube (1) und
einem Träger (7, 70), wobei letzterer einen die Schraube (1) aufnehmenden Hohlraum (8, 9, 28, 29) aufweist, wobei sich begrenzende Wandungen des Hohlraums (8, 9, 28, 29) beim Einbringen der Schraube (1) in Reib- und/oder Formschluss mit dem Gewinde (3) der Schraube (1) befinden,
**dadurch gekennzeichnet,**
**dass** in dem Hohlraum (8, 9, 28, 29) eine von der Schraube (1) durchdringbare, im Wesentlichen quer zur Schraubenlängsachse (Y) angeordnete Membran (11) angeordnet ist, die unter Verformung beim Einbringen der Schraube (1) eine vornehmlich das Gewinde (3) wenigstens teilweise umhüllende Schürze (15) bildet.

2. Verbindungseinrichtung nach Anspruch 1, **dadurch gekennzeichnet, dass** der Träger (7) eine vorzugsweise ebene Aufstandsfläche (17) umfasst, die im Wesentlichen im rechten Winkel zur Schraubenlängsachse (Y) angeordnet ist, wobei die Schraube (1) und/oder wenigstens ein Montageteil (23, 24) auf der Aufstandsfläche (17) anliegt, und dass der Hohlraum (8, 9, 28, 29) offen an der Aufstandsfläche (17) endet.

3. Verbindungseinrichtung nach einem der vorangehenden Ansprüche, **dadurch gekennzeichnet, dass** der Durchmesser (d) des Hohlraums (28, 29) entlang der Schraubenlängsachse (Y) variiert wird, so dass dieser an der Membran (11) und/oder an der Seite des Hohlraums (28, 29), von der die Schraube (1) eingebracht wird, den größten Durchmesser (dₘₐₓ₂; dₘₐₓ₁) aufweist und zwischen diesen Bereichen den kleinsten Durchmesser (dₘᵢₙ).

4. Verbindungseinrichtung nach einem der vorangehenden Ansprüche, **dadurch gekennzeichnet, dass** der kleinste Durchmesser (d) des Hohlraums (8, 9, 28, 29), im rechten Winkel zur Schraubenlängsachse (Y) gesehen, kleiner ist als der Außendurchmesser (Da) des Gewindes (3).

5. Verbindungseinrichtung nach einem der vorangehenden Ansprüche, **dadurch gekennzeichnet, dass** der kleinste Durchmesser (d) des Hohlraums (8, 9, 28, 29) im rechten Winkel zur Schraubenlängsachse (Y) gesehen, größer ist als der Kerndurchmesser (Di) des Gewindes (3).

6. Verbindungseinrichtung nach einem der vorangehenden Ansprüche, **dadurch gekennzeichnet, dass** der Träger (7) als Profil, insbesondere aus Leichtmetall, ausgebildet ist, und der Hohlraum (8, 9, 28, 29) innerhalb des Trägers (7) einen Kanal in Längsrichtung (L) des Profils bildet.

7. Verbindungseinrichtung nach einem der vorangehenden Ansprüche, **dadurch gekennzeichnet, dass** der Hohlraum (8, 9, 28, 29) wenigstens zwei Seitenwände (10, 30) aufweist und die Membran (11) die Seitenwände (10, 30) verbindet.

8. Verbindungseinrichtung nach Anspruch 7, **dadurch gekennzeichnet, dass** die Seitenwände (30) im oberen Bereich des Hohlraums (28, 29) und/oder unteren Bereich des Hohlraums (28, 29) einen größeren Abstand (dₘₐₓ₁, dₘₐₓ₂) voneinander aufweisen, und einen minimalen Abstand (dₘᵢₙ) in einem Bereich dazwischen.

9. Verbindungseinrichtung nach einem der vorangehenden Ansprüche, **dadurch gekennzeichnet, dass** die Schraube (1) eine gewindeformende Schraube ist, und insbesondere eine formgebende Spitze (6) aufweist.

10. Verbindungseinrichtung nach einem der vorangehenden Ansprüche, **dadurch gekennzeichnet, dass** wenigstens ein Verlängerungsschenkel (12) über die Membran (11) hinaus im Wesentlichen in Richtung der Schraubenlängsachse (Y) nach unten einseitig vorsteht.

11. Verbindungseinrichtung nach Anspruch 10, **dadurch gekennzeichnet, dass** der Verlängerungsschenkel (12) an seinem Ende wenigstens einen im Wesentlichen zur Schraubenlängsachse (Y) gerichteten Vorsprung (16) aufweist.

12. Verbindungseinrichtung nach einem der vorangehenden Ansprüche, **dadurch gekennzeichnet, dass** im Träger (70) über dem Hohlraum (8) ein Schraubkanal (31) angeordnet ist, wobei der Schraubkanal (31) Vorsprünge (32) aufweist, die eine Öffnung definieren, die einen größeren Durchmesser (dG) verglichen mit dem Durchmesser (d) des Hohlraums (8) aufweist.

13. Ein Verfahren zum Erstellen einer Schraubverbindung, das die Schritte umfasst:
**(i)** Orientieren einer Schraube (1) über einem Träger (7, 70), sodass die Schraubenlängsachse (Y) in einen Hohlraum (8) des Trägers (7, 70) zeigt,
**(ii)** Eindrehen der Schraube (1) in den Hohlraum (8, 9) bis zur einer Membran (11), wobei sich das Gewinde (3) der Schraube (1) im Eingriff mit dem Träger (7, 70) in dessen Hohlraum (8) befindet,
**(iii)** Weiteres Eindrehen der Schraube (1), sodass diese durch die Membran (11) durchtritt, und
(iv) Eindrehen der Schraube (1) bis in eine Endposition, in welcher ein Schraubenkopf (2) der Schraube (1) an dem Träger (7, 70) oder einem Montageteil (23, 24) mittelbar oder unmittelbar anliegt.

14. Verfahren nach Anspruch 13, **dadurch gekennzeichnet, dass** beim Eindrehen in Schritt (ii) der Eingriff der Schraube (1) im Träger (7, 70) durch plastische Verformung des Hohlraums (8) durch die Schraube (1) geschaffen wird.

15. Verfahren gemäß einem der Ansprüche 13 bis 14, **dadurch gekennzeichnet, dass** der Durchtritt der Schraube (1) durch die Membran (11) durch plastische Verformung der Membran (11) durch die Schraube (1) beim Eindrehen in Schritt (iii) geschaffen wird.

16. Verfahren gemäß Anspruch 15, **dadurch gekennzeichnet, dass** die Membran (11) als Fließmasse nach oben/unten von der Schraube (1) verdrängt wird und dort von Seitenwänden (10) des Hohlraums (8, 9) und/oder Verlängerungsschenkeln (12) gestützt wird und somit einen eng an der Schraube (1) anliegenden Teil von Gewindegängen (13) des Hohlraums (8, 9) bildet.

## Claims

1. Connecting device (27) comprising
a screw (1) and
a support (7, 70), the latter having a cavity (8, 9, 28, 29) accommodating the screw (1), and on introduction of the screw (1) adjacent walls of the cavity (8, 9, 28, 29) are in frictional and/or form-locking connection with the thread (3) of the screw (1),
**characterized in that**
in the cavity (8, 9, 28, 29) a membrane (11) penetratable by the screw (1) is arranged and is disposed substantially transversely of the screw longitudinal axis (Y) and on deformation on introduction of the screw (1) forms an apron (15) predominantly at least partially enclosing the thread (3).

2. Connecting device according to claim 1, **characterized in that** the support (7) has a preferably planar support surface (17) arranged substantially perpendicularly to the screw longitudinal axis (Y), the screw (1) and/or at least one assembly part (23, 24) bearing on the support surface (17) and that the cavity (8, 9, 28, 29) terminates open at the support surface (17).

3. Connecting device according to any one of the preceding claims, **characterized in that** the diameter (d) of the cavity (28, 29) is varied along the screw longitudinal axis (Y) so that said cavity has the greatest diameter (d_{max2;} dₘₐₓ₁) at the membrane (11) and/or at the side of the cavity (28, 29) from which the screw (1) is introduced and between said regions the smallest diameter (dₘᵢₙ).

4. Connecting device according to any one of the preceding claims, **characterized in that** the smallest diameter (d) of the cavity (8, 9, 28, 29) seen at a right angle to the screw longitudinal axis (Y) is smaller than the outer diameter (Da) of the thread (3).

5. Connecting device according to any one of the preceding claims, **characterized in that** the smallest diameter (d) of the cavity (8, 9, 28, 29) seen at a right angle to the screw longitudinal axis (Y) is greater than the core diameter (Di) of the thread (3).

6. Connecting device according to any one of the preceding claims, **characterized in that** the support (7) is formed as profile section, in particular of light metal, and the cavity (8, 9, 28, 29) forms within the support (7) a channel in the longitudinal direction (L) of the profile.

7. Connecting device according to any one of the preceding claims, **characterized in that** the cavity (8, 9, 28, 29) has at least two side walls (10, 30) and the membrane (11) connects the side walls (10, 30).

8. Connecting device according to claim 7, **characterized in that** the side walls (30) in the upper region of the cavity (28, 29) and/or in the lower region of the cavity (28, 29) have a larger spacing (d_{max1;} dₘₐₓ₂) from each other and a minimum spacing (dₘᵢₙ) in a region therebetween.

9. Connecting device according to any one of the preceding claims, **characterized in that** the screw (1) is a thread-forming screw and in particular has a shaping tip (6).

10. Connecting device according to any one of the preceding claims, **characterized in that** at least one extension leg (12) extends downwardly on one side beyond the membrane (11) substantially in the direction of the screw longitudinal axis (Y).

11. Connecting device according to claim 10, **characterized in that** the extension leg (12) comprises at its end at least one projection (16) directed substantially towards the screw longitudinal axis (Y)

12. Connecting device according to any one of the preceding claims, **characterized in that** in the support (70) above the cavity (8) a screw passage (31) is arranged, said screw passage (31) having projections (32) which define an opening which has a greater diameter (dG) than the diameter (d) of the cavity (8).

13. A method of establishing a screw connection comprising the following steps:
(i) arranging a screw (1) above a support (7, 70) so that the screw longitudinal axis (Y) points into a cavity (8) of the support (7, 70),
(ii) turning the screw (1) into the cavity (8, 9) up to a membrane (11), the thread (3) of the screw (1) being in engagement with the support (7, 70) in the cavity (8) thereof,
(iii) further screwing in of the screw (1) so that it passes through the membrane (11)
and
(iv) turning the screw (1) up to an end position in which a screw head (2) of the screw (1) bears directly or indirectly on the support (7, 70) or an assembly part (23, 24).

14. Method according to claim 13, **characterized in that** in the screwing in step (ii) the engagement of the screw (1) in the support (7, 70) is established by plastic deformation of the cavity (8) by the screw (1).

15. Method according to any one of claims 13 and 14, **characterized in that** the passage of the screw (1) through the membrane (11) is effected by plastic deformation of the membrane (11) by the screw (1) in the screwing-in of step (iii).

16. Method according to claim 15, **characterized in that** the membrane (11) is displaced as flow material upwardly/downwardly by the screw (1) and is supported there by side walls (10) of the cavity (8, 9) and/or extension legs (12) and thus forms a part of the thread flights (13) of the cavity (8, 9) bearing closely on the screw (1).

## Revendications

1. Dispositif de liaison (27) comprenant :
une vis (1) et
un support (7, 70), ce dernier présentant un espace creux (8, 9, 28, 29) recevant la vis (1), des parois de délimitation de l'espace creux (8, 9, 28, 29) se trouvant, lors de l'introduction de la vis (1), dans un état à force et/ou à complémentarité de forme avec le filetage (3) de la vis (1),
**caractérisé en ce**
**qu'**une membrane (11) pouvant être traversée par la vis (1), disposée sensiblement de manière transversale par rapport à l'axe longitudinal de vis (Y) est disposée dans l'espace creux (8, 9, 28, 29), laquelle forme un tablier (15) enveloppant au moins en partie principalement le filetage (3) avec une déformation lors de l'introduction de la vis (1).

2. Dispositif de liaison selon la revendication 1, **caractérisé en ce que** le support (7) comprend une surface d'appui (17) de préférence plane, qui est disposée sensiblement selon un angle droit par rapport à l'axe longitudinal de vis (Y), la vis (1) et/ou au moins une pièce de montage (23, 24) reposant sur la surface d'appui (17), et **en ce que** l'espace creux (8, 9, 28, 29) débouche au niveau de la surface d'appui (17).

3. Dispositif de liaison selon l'une quelconque des revendications précédentes, **caractérisé en ce que** le diamètre (d) de l'espace creux (28, 29) varie le long de l'axe longitudinal de vis (Y) de sorte que ledit espace creux présente au niveau de la membrane (11) et/ou au niveau du côté de l'espace creux (28, 29), depuis lequel la vis (1) est introduite, le diamètre le plus grand (dₘₐₓ₂, dₘₐₓ₁) et, entre lesdites zones, le diamètre le plus petit (dₘᵢₙ).

4. Dispositif de liaison selon l'une quelconque des revendications précédentes, **caractérisé en ce que** le diamètre le plus petit (d) de l'espace creux (8, 9, 28, 29) est, vu selon l'angle droit par rapport à l'axe longitudinal de vis (Y), plus petit que le diamètre extérieur (Da) du filetage (3).

5. Dispositif de liaison selon l'une quelconque des revendications précédentes, **caractérisé en ce que** le plus petit diamètre (d) de l'espace creux (8, 9, 28, 29) est, vu selon l'angle droit par rapport à l'axe longitudinal de vis (Y), plus grand que le diamètre d'âme (Di) du filetage (3).

6. Dispositif de liaison selon l'une quelconque des revendications précédentes, **caractérisé en ce que** le support (7) est réalisé sous la forme d'un profil, en particulier composé d'un métal léger, et **en ce que** l'espace creux (8, 9, 28, 29) forme, à l'intérieur du support (7), un canal dans la direction longitudinale (L) du profil.

7. Dispositif de liaison selon l'une quelconque des revendications précédentes, **caractérisé en ce que** l'espace creux (8, 9, 28, 29) présente au moins deux parois latérales (10, 30), et **en ce que** la membrane (11) relie les parois latérales (10, 30).

8. Dispositif de liaison selon la revendication 7, **caractérisé en ce que** les parois latérales (30) présentent, dans la zone supérieure de l'espace creux (28, 29) et/ou dans la zone inférieure de l'espace creux (28, 29), une distance (dₘₐₓ₁, dₘₐₓ₂) les unes des autres plus grande, et, dans une zone intercalée, une distance minimale (dₘᵢₙ).

9. Dispositif de liaison selon l'une quelconque des revendications précédentes, **caractérisé en ce que** la vis (1) est une vis formant un filetage et présente, en particulier, une pointe (6) de mise en forme.

10. Dispositif de liaison selon l'une quelconque des revendications précédentes, **caractérisé en ce qu'**au moins une branche de rallonge (12) fait saillie d'un côté vers le bas de la membrane (11) essentiellement en direction de l'axe longitudinal de vis (Y).

11. Dispositif de liaison selon la revendication 10, **caractérisé en ce que** la branche de rallonge (12) présente, au niveau de son extrémité, au moins une partie faisant saillie (16) orientée essentiellement par rapport à l'axe longitudinal de vis (Y).

12. Dispositif de liaison selon l'une quelconque des revendications précédentes, **caractérisé en ce qu'**un canal de vis (31) est disposé dans le support (70) au-dessus de l'espace creux (8), le canal de vis (31) présentant des parties faisant saillie (32), qui définissent une ouverture, qui présente, en comparaison avec le diamètre (d) de l'espace creux (8), un diamètre plus grand (dG).

13. Procédé servant à créer une liaison vissée, qui comprend les étapes suivantes :
(i) l'orientation d'une vis (1) au-dessus d'un support (7, 70) de sorte que l'axe longitudinal de vis (Y) pointe en direction de l'espace creux (8) du support (7, 70) ;
(ii) l'insertion par rotation de la vis (1) dans l'espace creux (8, 9) jusqu'à une membrane (11), le filetage (3) de la vis (1) se trouvant en prise avec le support (7, 70) dans l'espace creux (8) de ce dernier ;
(ii) la poursuite de l'insertion par rotation de la vis (1) de sorte que cette dernière traverse de part en part la membrane (11) ; et
(iv) l'insertion par rotation de la vis (1) jusque dans une position de fin de course, dans laquelle la tête de vis (2) de la vis (1) repose indirectement ou directement au niveau du support (7, 70) ou au niveau d'une pièce de montage (23, 24).

14. Procédé selon la revendication 13, **caractérisé en ce que** lors de l'insertion par rotation à l'étape (ii), la prise de la vis (1) dans le support (7, 70) est créée par déformation plastique de l'espace creux (8) par la vis (1).

15. Procédé selon l'une quelconque des revendications 13 à 14, **caractérisé en ce que** le passage de la vis (1) au travers de la membrane (11) est créé par une déformation plastique de la membrane (11) par la vis (1) lors de l'insertion par rotation à l'étape (iii).

16. Procédé selon la revendication 15, **caractérisé en ce que** la membrane (11) est refoulée, en tant que masse coulante, vers le haut/bas par la vis (1) et y est soutenue par des parois latérales (10) de l'espace creux (8, 9) et/ou par des branches de rallonge (12) et forme ce faisant une partie, reposant étroitement au niveau de la vis (1), des pas de vis (13) de l'espace creux (8, 9).
